(19) Europäisches Patentamt
European Patent Office
Office européen des brevets

(11) Publication number: **0 108 271**
**B1**

(12) **EUROPEAN PATENT SPECIFICATION**

(45) Date of publication of patent specification: **19.02.86**

(51) Int. Cl.[4]: **C 01 B 33/20**, C 01 B 33/28, B 01 J 29/04, B 01 J 29/24

(21) Application number: **83110068.0**

(22) Date of filing: **08.10.83**

# (54) Ferrosilicate molecular sieve composition.

(30) Priority: **12.10.82 US 433909**

(43) Date of publication of application:
**16.05.84 Bulletin 84/20**

(45) Publication of the grant of the patent:
**19.02.86 Bulletin 86/08**

(84) Designated Contracting States:
**AT BE CH DE FR GB IT LI NL SE**

(56) References cited:
**EP-A-0 013 630**
**FR-A-2 403 975**

(73) Proprietor: **UNION CARBIDE CORPORATION**
**39 Old Ridgebury Road**
**Danbury Connecticut 06817 (US)**

(72) Inventor: **Lok, Brent Mei-Tak**
**17A Deerwood Drive**
**New City, N.Y. 10956 (US)**
Inventor: **Messina, Celeste Anne**
**20 Somerstown Road**
**Ossining, N.Y. 10562 (US)**

(74) Representative: **Eggert, Hans-Gunther, Dr.**
**Räderscheidtstrasse 1**
**D-5000 Köln 41 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 108 271 B1

**Description**

The present invention relates in general to crystalline silicate compositions, and more particularly to crystalline ferrosilicate compositions which exhibit adsorptive, ion-exchange and catalytic properties similar to those of zeolitic aluminosilicate molecular sieves. Members of the novel class of ferrosilicates of the present invention are denominated generically as FeSO-38.

Ferrosilicates which are three-dimensionally crystalline and whose structures are comprised of $SiO_2$ and $FeO_2^-$ tetrahydra have heretofore been reported in US—A—4,208,305 issued June 17, 1980 to Kouwenhoven et al., and in published European Patent Application Publication No. 0,013,630 claiming US—priority of January 15, 1979 by M. K. Rubin, et al. The latter disclosure concerns the preparation of silicates which contain iron and/or chromium and which can optionally contain aluminum. These silicates are said to be novel forms of the zeolite ZSM-12. The former disclosure is more general in its description, but the two species characterized therein by X-ray powder diffraction patterns appear to have a close structural relationship to zeolite ZSM-5 and the zeolite mineral ferrierite, respectively. In both cases the compositions are synthesized hydrothermally from aqueous reaction mixtures which must contain organic templating agents, and which can contain as optional ingredients, alkali metal or alkaline earth metal cations.

We have now discovered a new microporous crystalline ferrosilicate composition having uniform pore diameters of about 7 angstroms, an empirical chemical composition in the anhydrous state and expressed in terms of molar oxide ratios of:

$$a\ M_{2/n}O:[Al_xFe_{(1-x)}]_2O_3:b\ SiO_2$$

wherein "M" is at least one cation having the valence "n", "a" has a value of from zero to 3.5, "b" has a value of from 3 to 100, "x" has a value of from zero to 0.98, said ferrosilicate having a characteristic X-ray powder diffraction pattern containing at least the d-spacings of Table A, below.

TABLE A

| 2θ | d(A) | Relative intensity |
|---|---|---|
| 6.4—6.65 | 13.8—13.3 | M—VS |
| 9.7—9.85 | 9.12—8.98 | S—VS |
| 13.4—13.6 | 6.61—6.51 | M—S |
| 22.2—22.45 | 4.00—3.98 | M—S |
| 25.55—25.8 | 3.486—3.453 | S—VS |
| 27.65—27.85 | 3.226—3.203 | M—S |

It is preferred that the composition of the ferrosilicate is such that in the empirical chemical formula set forth above, "a" has a value of from zero to 2.5, "b" has a value of from 5 to 50 and "x" has a value of from zero to 0.5. Most preferably "a" has a value of from zero to 2.5, "b" has a value of from 8 to 30 and "x" is essentially zero.

The X-ray pattern of Table A and all other X-ray patterns appearing hereinafter were obtained using standard X-ray powder diffraction techniques. The radiation source was a high-intensity, copper target, X-ray tube operated at 50 Kv and 40 ma. The diffraction pattern from the copper K radiation and graphite monochromator is suitably recorded by an X-ray spectrometer scintillation counter, pulse height and analyzer and strip chart recorder. Flat compressed powder samples are scanned at 2° (2 theta) per minute, using a two-second time constant. Interplanar spacings (d) are obtained from the position of the diffraction peaks, expressed at 2θ where θ is the Bragg angle, as observed on the strip chart. Intensities are determined from the heights of diffraction peaks after subtracting background. The intensity of the strongest line is designated $I_o$, and is used to determine the relative intensity values by substitution into the formula "$100 \times I/I_o$" where I is the intensity of each line other than the strongest line. In some instances the numerical values obtained using the formula are reported, and in others the relative intensities are reported in terms of the notations vs, s, m, w and vw which represent very strong, strong, medium, weak and very weak, respectively.

As will be understood by those skilled in the art, the determination of the parameter 2 theta is subject to both human and mechanical error, which in combination, can impose an uncertainty of about ±0.4° on each reported value of 2 theta. This uncertainty is, of course, also manifested in the reported values of the d-spacings in terms of angstrom units, which are calculated from the 2 theta values. This imprecision is

general throughout the art and is not sufficient to preclude the differentiation of the present crystalline materials from each other and from the compositions of the prior art.

The FeSO-38 compositions of this invention consist structurally of a three-dimensional network of $SiO_2$, $FeO_2^-$ and optionally $AlO_2^-$ tetrahedra. In the as-synthesized form, electrical neutrality is provided by charge-balancing cations which are associated with the $FeO_2^-$ and $AlO_2^-$ tetrahedra of the framework structure. Alkali metal, alkaline earth metal, and organic cations derived from the organic templating agent can all be present in the as-synthesized form of FeSO-38 by virtue of being present in the synthesis reaction mixture. Also the organic templating compound can merely be occluded in the pore system of the crystal structure, i.e., not bonded to the crystal lattice, but as an adsorbed or encapsulated phase. Both types of organic constituents are possible in the same structure. The maximum quantity of organic species present is dependent upon the molecular dimensions of the organic molecule or ion and its configuration. In those cases where a cation derived from the organic templating agent has a larger kinetic diameter than the effective pore diameter of the FeSO-38, or occupies a lattice position not accessible to the major pore system, such organic cation is not considered to be ion-exchangeable in the ordinary sense. Such cations can, for the most part, however, be thermally decomposed to form ion-exchangeable ammonium or hydrogen cations by calcination in air at temperatures of from 400°C. to 700°C. The bulk of the non-organic cations are ion-exchangeable after access to the inner structure of the FeSO-38 crystals is achieved by substantial removal of pore-blocking organic species, and thus can be replaced by other metal cations as well as $NH_4^+$ and $H^+$ cations. Conventional ion-exchange procedures are applicable. Activation, i.e., dehydration, to remove adsorbed water from the crystals is readily accomplished even at room temperatures if carried out in a vacuum, but calcination in air at elevated temperatures of up to 700°C. is generally more convenient and is preferred for that reason.

Although much remains to be learned about the manner in which templating agents influence the crystallization mechanism, it does appear that molecular size and configuration are important factors. It has been discovered that tetraethylammonium compounds such as the bromide and the hydroxide and also triethylamine serve well as templating agents in the formation of FeSO-38 materials, and hence are preferred. It is contemplated that other organic (including organometallic) compounds will be suitable for the purpose, particularly among the group containing an element of Group VA of the Periodic Classification of the Elements (N, P, As, Sb, and Bi), preferably nitrogen or phosphorus, containing at least one alkyl or aryl radical having between 1 and 7 carbon atoms, more preferably containing at least one ethyl group. Quaternary ammonium compounds and amines are most preferred. Mixtures of suitable templating agents are also effective in producing FeSO-38 crystals.

FeSO-38 can be prepared from a reaction mixture having a composition in terms of mole ratios of oxides within the following ranges:

$$0\text{—}10\ R_2O:1\text{—}50\ M_{2/n}O:[Al_xFe_{(1-x)}]_2O_3:10\text{—}100\ SiO_2:200\text{—}2000\ H_2O$$

wherein "R" represents a tetraethylammonium templating agent, "M" represents an alkali or alkaline earth metal having the valence "n", and "x" has a value of from zero to 0.99. Preferably the mole ratios of oxides in the reaction mixture are

$$1\text{—}6\ R_2O:10\text{—}30\ M_{2/n}O:[Al_xFe_{(1-x)}]_2O_3:15\text{—}80\ SiO_2:200\text{—}1200\ H_2O$$

and "M" represents one or a mixture of two or more of sodium, potassium and calcium. Most preferably the reaction mixture contains no aluminum other than that present which may be present as an impurity in the reagents which provide the other oxide constituents. Such a reaction mixture is essentially the composition in terms of mole ratios of oxides:

$$1\text{—}6\ R_2O:10\text{—}30\ M_{2/n}O:Fe_2O_3:15\text{—}80\ SiO_2:200\text{—}2000\ H_2O$$

It will be understood, however, that since the addition of seed crystals of a mordenite-type crystal structure to the reaction mixture to expedite crystallization is a part of a preferred synthesis procedure, a source of aluminum, i.e., an aluminosilicate, can thereby be imparted to the gel and will appear in the product solids. The use of previously prepared FeSO-38 as the seed crystals can greatly reduce the amount of aluminum imparted to the reaction mixture as a consequence of the seeding procedure. Preferably seed crystals in an amount of at least 0.001%, and more preferably at least 0.1% up to 10% based on the solid oxide weight of the other constituents of the reaction mixture, are employed.

In preparing the reaction mixture, the conventional reactants used in zeolite synthesis are, in general, suitably employed. Iron can be imparted as salts such as $FeCl_3$, $Fe(NO_3)_3$, iron acetate, iron oxyhydroxide, sodium ferrate and the like. Sources of silica include any reactive form of amorphous silica such as silica gel, precipitated silica, fumed silica, silica sol, silica aerogel and also alkali metal silicates. If aluminum is intentionally added, it can be in the form of alpha alumina, gamma alumina, sodium aluminate, aluminum alkoxide, alumina trihydrate, boehmite and the like. The alkali metal and/or alkaline earth metals are preferably added as the hydroxide, but water-soluble salts of the metals can be used. The organic templating agent, R, has been described hereinabove.

The reaction can be carried out under static or stirred conditions, at a temperature in the range of 100°C. to 250°C. and under autogenous pressure in a sealed reactor. The reactor is preferably lined with an inert plastic material such as polytetrafluoroethylene. It has been found that when $SiO_2/Fe_2O_3$ molar ratios of about 20 or higher are employed in the reaction mixture there is a tendency to produce, as an impurity, a crystalline material having a structure similar to ZSM-12. It is also noted that prolonged crystallization periods, i.e., greater than about 5 days, also tend to increase the production of a variety of other crystalline impurities.

Example 1

(a) A reaction mixture was prepared by combining 10.1 grams of iron nitrate nonahydrate ($Fe(NO_3)_3 \cdot 9H_2O$) dissolved in 35.0 grams of water with 100 grams of an aqueous silica sol (30 wt.% $SiO_2$) and mixing well. Thereafter was added a solution of 32.2 grams of tetraethylammonium bromide (TEABr) in 20.0 grams of water and the mixture stirred until homogeneous. To this mixture was further added a solution of 15.0 grams of sodium hydroxide (NaOH) in 15.0 grams of water and the mixture stirred until homogeneous. Into this mixture were dispersed 4.4 grams of seed crystals of a synthetic zeolite having a mordenite-type crystal structure and having a chemical composition in terms of weight-% oxides of:

$Na_2O$— 5.2 wt.%

$Al_2O_3$—12.4 wt.%

$SiO_2$—66.4 wt.%

LOI—14.6 wt.%

The composition of the final reaction mixture in molar oxide ratios was:

$$6.0\ (TEA_2O):Fe_2O_3:40\ SiO_2:15.0\ Na_2O:658\ H_2O:10\ \text{wt.\% seed}$$

The reaction mixture was placed in a stainless steel pressure vessel equipped with a stirring shaft and heated with a heating mantle at 150°C. at autogenous pressure with agitation for 24.5 hours. The solid reaction product was recovered by centrifugation, washed with water, and dried in air at 100°C. A portion of the solids was subjected to X-ray and chemical analysis. Chemical analysis showed 2.7 wt.% C, 0.40 wt.% N, 6.1 wt.% $Na_2O$, 4.2 wt.% $Al_2O_3$, 7.9 wt.% $Fe_2O_3$, 63 wt.% $SiO_2$, 17.7 wt.% LOI, giving a product composition in terms of molar oxide ratios of:

$$0.83\ Al_2O_3:Fe_2O_3:21.2\ SiO_2:1.99\ Na_2O:0.28\ R_2O, \text{ or:}$$

$$1.09\ Na_2O:0.15\ R_2O:[Al_{0.45}Fe_{0.55}]_2O_3:11.6\ SiO_2$$

(b) A portion of the solid product of part (a) was calcined in air at about 550°C. for 2 hours. The calcined product had an X-ray powder diffraction pattern characterized by the following data wherein $I/I_o$ is the relative intensity and "d" the interplanar spacing:

| 2θ | d(A) | $100 \times I/I_o$ |
|---|---|---|
| 6.5 | 13.6 | 61 |
| 8.65 | 10.22 | 11 |
| 9.75 | 9.08 | 83 |
| 13.45 | 6.58 | 80 |
| 13.8 | 6.42 | 9 |
| 14.7 | 6.03 | 10 |
| 15.3 | 5.79 | 13 |
| 17.5 | 5.07 | 3 |
| 19.6 | 4.53 | 35 |
| 21.4 | 4.15 | 5 |
| 22.25 | 3.99 | 61 |
| 23.2 | 3.83 | 16 |
| 23.6 | 3.77 | 8 |
| 24.5 | 3.63 | 4 |
| 25.65 | 3.473 | 100 |
| 26.3 | 3.389 | 57 |
| 27.65 | 3.226 | 67 |
| 28.8 | 3.100 | 3 |
| 30.4 | 2.940 | 1 |
| 30.9 | 2.894 | 26 |
| 33.1 | 2.706 | 7 |
| 35.7 | 2.515 | 14 |
| 36.5 | 2.462 | 7 |
| 44.3 | 2.045 | 10 |
| 46.5 | 1.953 | 6 |
| 48.4 | 1.881 | 7 |
| 50.9 | 1.794 | 7 |

(c) Adsorption capacities were measured on the calcined product of part (b) using a standard McBain-Bakr gravimetric adsorption apparatus. The following data were obtained on a sample activated at 350°C.:

| | Kinetic diameter, A | Pressure, torr | Temp. °C | Wt.% adsorbed |
|---|---|---|---|---|
| $O_2$ | 3.46 | 101 | −183 | 9.8 |
| $O_2$ | 3.46 | 749 | −183 | 11.9 |
| Cyclohexane | 6.0 | 41 | 24.4 | 1.1 |
| Neopentane | 6.2 | 402 | 24.7 | 0.5 |
| $H_2O$ | 2.65 | 4.6 | 23.2 | 8.6 |
| $H_2O$ | 2.65 | 19 | 24.5 | 11.7 |
| n-hexane | 4.3 | 100 | 24.4 | 1.5 |

The pore size of the calcined product is greater than 3.46 A as shown by adsorption of oxygen, kinetic diameter of 3.46 A, and less than 4.3 A, as shown by negligible adsorption of n-hexane, kinetic diameter of 4.3 A.

Example 2

A reaction mixture was prepared by combining 10.1 grams of iron nitrate nonahydrate ($Fe(NO_3)_3 \cdot 9H_2O$) dissolved in 70 grams of water with 100 grams of an aqueous silica sol (30 wt.% $SiO_2$) and mixing well. To this mixture was added 31.5 grams of tetraethylammonium bromide (TEABr) and the mixture stirred until homogeneous. To the resulting mixture was added 15.0 grams of sodium hydroxide (NaOH). The composition of the final homogeneous reaction mixture in terms of molar oxide ratios was:

$$6.0\ (TEA)_2O : Fe_2O_3 : 40\ SiO_2 : 15.0\ Na_2O : 658\ H_2O$$

The reaction mixture was placed in a stainless steel pressure vessel equipped with a stirring shaft and heated for 91 hours with a heating mantle at 150°C. at autogenous pressure with occasional agitation. The solid reaction product was recovered by filtration and centrifugation, washed with water and dried in air at 110°C. One of the major products of the solids has an X-ray diffraction pattern characterized by the following data:

| 2θ | d(A) | Relative intensity |
|---|---|---|
| 6.4 | 13.8 | M |
| 8.6 | 10.28 | W |
| 9.75 | 9.07 | S |
| 13.5 | 6.56 | M |
| 13.85 | 6.39 | M |
| 14.6 | 6.07 | M |
| 19.7 | 4.51 | W |
| 22.3 | 3.99 | S |
| 25.7 | 3.466 | S |
| 26.25 | 3.395 | M |
| 27.7 | 3.220 | S |
| 31.0 | 2.885 | M |
| 35.0 | 2.564 | W |
| 35.8 | 2.508 | W |
| 46.7 | 1.945 | W |
| 47.5 | 1.914 | W |
| 48.5 | 1.877 | M |
| 51.0 | 1.791 | W |

Example 3

FeSO-38 was crystallized from a reaction mixture containing no organic templating agent. The composition, in terms of mole ratios of oxides, of the reaction mixture was:

$$Fe_2O_3:80\ SiO_2:27.6\ Na_2O:1150\ H_2O$$

and contained 10 weight per cent seed crystals of mordenite based on the solids weight of the other reagents. To prepare the reaction gel, 8.1 grams of iron nitrate nonahydrate ($Fe(NO_3)_3 \cdot 9H_2O$) was dissolved in 20 grams of water and blended with 160.2 grams of an aqueous silica sol (30 wt.% $SiO_2$). Thereafter a solution of 21.8 grams of sodium hydroxide (NaOH) in 60 grams of water and 7.4 grams of water were added and the mixture stirred until homogeneous. Into this mixture were dispersed 6.7 grams of the same mordenite-type seed crystals as in the procedure of part (a) of Example 1. A portion of the reaction mixture was placed in a stainless steel pressure vessel lined with an inert plastic material (polytetrafluoroethylene) and heated in an oven at 150°C. at autogenous pressure for 72.5 hours. The solid reaction product was recovered by filtration, washed with water, and dried in air at 100°C. The product had an X-ray diffraction pattern essentially identical to that in Example 2.

Example 4

FeSO-38 was found to be produced in a reaction system in which triethylamine ($Et_3N$) was utilized as the sole organic templating agent. Using the same sequence for combining the reagents as in Example 1 above, iron nitrate nonahydrate, water, triethylamine, sodium hydroxide and an aqueous silica sol were combined to form a reaction mixture having the following composition:

$$6Et_3N:Fe_2O_3:40\ SiO_2:15\ Na_2O:665\ H_2O$$

and containing 10 weight per cent synthetic mordenite-type seed crystals based on the solids weight of the

other reagents. The reaction mixture was placed in a stainless steel pressure vessel equipped with a stirring shaft and heated with a heating mantle at 150°C. under autogenous pressure with agitation for 24 hours. The solid reaction product was recovered by filtration, washed with water, and dried in air at room temperature. A portion of the solids was subjected to X-ray analysis and found to contain FeSO-38 in admixture with an amorphous material not further identified.

Examples 5—19

Reaction mixtures were prepared in each of Examples 5 through 19 in the manner of Example 1 using formulations corresponding to the following oxide mole ratios:

a $Na_2O$:b $(TEA)_2O$:c $Fe_2O_3$:d $SiO_2$:e $H_2O$ and,

except for Example 6, containing 10 weight percent synthetic mordenite-type seed crystals based on the solids weight of the other reagents. The values of a, b, c, d and e in each Example are indicated in Table B below. FeSO-38 was found to be produced in each case as established by X-ray analysis.

TABLE B

| Example # | a | b | c | d | e | Stirring | Seeds | Reaction temp (°C) | Time (h) |
|---|---|---|---|---|---|---|---|---|---|
| 5 | 27.6 | — | 1* | 80 | 1150 | — | X | 200 | 72 |
| 6 | 15 | 6 | 2* | 40 | 655 | — | — | 150 | 168 |
| 7 | 15 | 6 | 2* | 40 | 655 | — | X | 150 | 168 |
| 8 | 15 | 6 | 2 | 40 | 655 | — | X | 150 | 118 |
| 9 | 15 | 6— | 3 | 40 | 658 | — | X | 150 | 113 |
| 10 | 15 | 6 | 2 | 40 | 655 | — | X | 175 | 48 |
| 11 | 15 | 6 | 2 | 40 | 655 | — | X | 125 | 168 |
| 12 | 15 | 6 | 1 | 80 | 658 | — | X | 150 | 117 |
| 13 | 15 | 6 | 2 | 40 | 676 | X | X | 150 | 24 |
| 14 | 15 | 3 | 1 | 40 | 658 | X | X | 150 | 24 |
| 15 | 15 | 1 | 1 | 40 | 658 | X | X | 150 | 24 |
| 16 | 15 | 1 | 1 | 40 | 658 | X | X | 150 | 50 |
| 17 | 15 | 1 | 1 | 40 | 658 | X | X | 125 | 98.5 |
| 18 | 15 | — | 1 | 40 | 658 | X | X | 150 | 72 |
| 19 | 10 | 6 | 1 | 40 | 658 | X | X | 150 | 71 |

* Iron source was —FeOOH

The chemical analyses of the products of Examples 8, 10, 13, and 15 in terms of weight-% of carbon and the respective oxides are as follows:

TABLE C
Wt. %

| Ex. | $Al_2O_3$ | $Fe_2O_3$ | $SiO_2$ | $Na_2O$ | C | LOI |
|---|---|---|---|---|---|---|
| 8 | 1.1 | 7.4 | 65.5 | 5.8 | 3.3 | 17.3 |
| 10 | 1.2 | 10.9 | 65.0 | 5.8 | 3.5 | 17.4 |
| 13 | 2.8 | 10.3 | 63.0 | 5.2 | 3.7 | 18.2 |
| 15 | 2.3 | 9.6 | 56.6 | 8.2 | 1.7 | 23.8 |

In terms of molar ratios of oxides, the compositions of the product of Examples 8, 10, 13 and 15 are (anhydrous basis):

TABLE D

| Ex. | Formula |
|---|---|
| 8 | $1.64\ Na_2O:0.3\ R_2O:[Al_{0.187}Fe_{0.813}]_2O_3:18.9\ SiO_2$ |
| 10 | $1.17\ Na_2O:0.23\ R_2O:[Al_{0.145}Fe_{0.855}]_2O_3:13.6\ SiO_2$ |
| 13 | $0.91\ Na_2O:0.21\ R_2O:[Al_{0.3}Fe_{0.7}]_2O_3:11.4\ SiO_2$ |
| 15 | $1.59\ Na_2O:0.11\ R_2O:[Al_{0.28}Fe_{0.72}]_2O_3:11.4\ SiO_2$ |

Example 20

(a) A suspension of 10 grams of the solid FeSO-38 product prepared in Example 16 and 100 grams of 0.5 N hydrochloric acid was agitated at room temperature for 30 minutes. The sample was washed by filtration until no $Cl^-$ was found in the wash water, dried in air at room temperature, and then calcined in air at 550°C. for 2 hours. A portion of the product was found to have an X-ray diffraction pattern essentially identical to that in Example 1(b). The solid product was then calcined again for 1.5 hours in air starting at 500°C., cooling down to 200°C., and then calcining at 550°C, for 5.5 hours. The resulting product had an X-ray powder diffraction pattern essentially identical to that of the major phase in Example 2. Chemical analysis of the rehydrated product established the chemical composition to be 1.9 wt.-% $Na_2O$; 3.1 wt-% $Al_2O_3$; 6.3 wt-% $Fe_2O_3$; 75.1 wt.-% $SiO_2$ and 14.4 wt.-% LOI (volatiles). This analysis corresponds to a composition having an empirical chemical formula of:

$$0.78\ Na_2O:0.77\ Al_2O_3:Fe_2O_3:31.7\ SiO_2:20\ H_2O \text{ or}$$

$$0.44\ Na_2O:[Al_{0.44}Fe_{0.56}]_2O_3:17.91\ SiO_4:11.3\ H_2O$$

(b) Adsorption capacities were measured on the final calcined product of part (a) using a standard McBain-Bakr gravimetric adsorption apparatus. The following data were obtained on a sample activated at 350°C.:

| | Kinetic diameter, A | Pressure torr | Temp. °C | Wt.% adsorbed |
|---|---|---|---|---|
| $O_2$ | 3.46 | 100 | −183 | 16.0 |
| $O_2$ | 3.46 | 740 | −183 | 19.7 |
| n-hexane | 4.3 | 97 | 24.6 | 6.3 |
| Neopentane | 6.2 | 401 | 25.5 | 4.2 |
| $H_2O$ | 2.65 | 4.6 | 24.3 | 11.2 |
| $H_2O$ | 2.65 | 19.1 | 24.3 | 17.3 |

The pore size of the calcined product is greater than 6.2 A, as shown by adsorption of neopentane, kinetic diameter of 6.2 A.

Example 21

A reaction mixture was prepared by combining 14.5 grams of iron nitrate nonahydrate dissolved in 20 grams of water with 9.2 grams of aluminum isopropoxide, $[Al(OC_3H_7)_3]$, and 5 grams of an aqueous silica sol (30 wt.-% $SiO_2$) and the combined constituents mixed thoroughly. A solution of 12.0 grams of sodium hydroxide in 29.9 grams of water was then added, and the resultant mixture stirred until it was homogeneous. The composition of the final reaction mixture in terms of molar oxide ratios was:

$$3.3\ (TEA)_2O{:}Fe_2O_3{:}1.1\ Al_2O_3{:}22.3\ SiO_2{:}8.4\ Na_2O{:}369\ H_2O$$

The reaction mixture was placed in a stainless steel pressure vessel equipped with a stirring shaft and heated with a heating mantle at 150°C. at autogenous pressure with agitation for 64 hours. The solid reaction product was recovered by centrifugation, washed with water, and dried in air at 100°C. A portion of the solids was subjected to X-ray and chemical analysis. The above product had an X-ray diffraction pattern essentially identical to that of the major phase in Example 2. Chemical analysis showed 2.9 wt.% C, 6.7 wt.% $Na_2O$, 5.6 wt.% $Al_2O_3$, 8.3 wt.% $Fe_2O_3$, 62.4 wt.% $SiO_2$, 16.1 wt.% LOI, giving a product composition in molar oxide ratios of:

$$1.01\ Na_2O{:}0.14\ R_2O{:}[Al_{0.51}Fe_{0.49}]_2O_3{:}9.71\ SiO_2{:}8.35\ H_2O$$

Example 22

A reaction mixture was prepared by combining a solution of 14.5 grams of iron nitrate nonahydrate dissolved in 25.0 grams of water with 0.8 grams of aluminum isopropoxide, and then with 80.1 grams of an aqueous silica sol (30 wt.-% $SiO_2$). Thereafter was added a solution of 25.2 grams of tetraethylammonium bromide (TEABr) and the resulting composition stirred until homogeneous. To this mixture was then added a solution of 12.0 grams of sodium hydroxide in 29.4 grams of water and the mixture again stirred until homogeneous. The composition of the final reaction mixture in terms of molar oxide ratios was:

$$3.3\ (TEA)_2O{:}Fe_2O_3{:}0.1\ Al_2O_3{:}22.3\ SiO_2{:}8.4\ Na_2O{:}368\ H_2O$$

The reaction mixture was placed in a stainless steel pressure vessel equipped with a stirring shaft and heated with a heating mantle at 150°C. at autogenous pressure with agitation for 136 hours. The solid reaction product was recovered by centrifugation, washed with water, and dried in air at 100°C. A portion of the solids was subjected to X-ray and chemical analysis. The above product had an X-ray powder diffraction pattern essentially identical to that of the major phase in Example 2. Chemical analysis showed 2.7 wt.% C, 5.1 wt.% $Na_2O$, 1.1 wt.% $Al_2O_3$, 10.3 wt.% $Fe_2O_3$, 62.8 wt.% $SiO_2$, 21.1 wt.% LOI, giving a product composition in molar oxide ratios of (anhydrous basis):

$$1.09\ Na_2O{:}0.19\ R_2O{:}[Al_{0.14}Fe_{0.86}]_2O_3{:}13.8\ SiO_2$$

Example 23

(a) A crystalline FeSO-38 sample prepared in accordance with the synthesis procedure and conditions of Example 8 *supra,* was agitated for 30 minutes with ten times its weight of a 0.5 N NaOH solution at reflux temperature, washed with water, and thereafter agitated for 35 minutes with ten times its weight of 0.5 N HCl solution at reflux temperature. The resulting product was washed with water until the wash water was chloride-free, dried in air at room temperature, and then calcined in air for about 16 hours at 350°C. and then for 2 hours at 550°C. The calcined product had an X-ray powder diffraction pattern essentially identical to that of the major phase in Example 2. After storage for a period of several days, the calcined product was analyzed to determine its adsorptive characteristics using a standard McBain-Bakr gravimetric adsorption apparatus. Prior to the adsorption measurements, the sample was again activated at 350°C. The results are reported in Table E, below.

(b) A FeSO-38 sample prepared in accordance with the procedure and conditions of Example 16 *supra* was agitated for 30 minutes with ten times its weight of a 0.5 N NaOH solution at reflux temperature, washed with water, and then dried in air at room temperature. The dried product was calcined in air by rapidly heating to 550°C. and then cooled to 200°C. over the period of 1.5 hours, and finally reheated to 550°C. and maintained at that temperature for 5.5 hours. The calcined product had an X-ray powder diffraction pattern essentially identical to that of the major phase in Example 2. Adsorption characteristics of the calcined product were determined in accordance with the procedure of part (a) above. The results are set forth in Table E below:

TABLE E

| | Kinetic diameter, A | Pressure torr | Temp °C | Wt. % adsorbed Ex. 23(a) | Ex. 23(b) |
|---|---|---|---|---|---|
| $O_2$ | 3.46 | 100 | −183 | 14.9 | 9.0 |
| $O_2$ | 3.46 | 749 | −183 | 19.1 | — |
| $O_2$ | 3.46 | 760 | −183 | — | 11.0 |
| n-hexane | 4.3 | 100 | RT | 7.2 | — |
| n-hexane | 4.3 | 97 | RT | — | 2.5 |
| Neopentane | 6.2 | 401 | RT | 4.8 | 1.5 |
| $H_2O$ | 2.65 | 4.6 | RT | 9.9 | 8.1 |
| $H_2O$ | 2.65 | 19 | RT | 17.2 | 11.2 |

The pore size of the calcined product from Example 23(a) is greater than 6.2 A as shown by adsorption of neopentane kinetic diameter of 6.2 A. However, the pore size of the calcined product from Example 23(b) is greater than 3.46 A as shown by adsorption of oxygen, kinetic diameter of 3.46 A, and about 4.3 A as shown by low adsorption of n-hexane, kinetic diameter of 4.3 A. It is apparent from the data of Table E, above, and from similar data obtained with other preparations that a substantial portion of the pore volume of as-synthesized FeSO-38 materials is blocked by the presence of entrapped extraneous substances. Severe blocking of the pore openings is also observed with respect to as-synthesized FeSO-38 products. Washing with caustic is shown to be not very effective for increasing either the pore volume or pore size, but simple acid washing has been found to be quite effective for this purpose.

In order to demonstrate the catalytic activity of FeSO-38, calcined samples were tested for catalytic cracking. The test procedure employed was the catalytic cracking of premixed 2-mole % n-butane in helium stream in a 1/2" (1.27 cm) O.D. quartz tube reactor over 5 grams (20—40 mesh) of the FeSO-38 sample to be tested. The sample was activated *in situ* for 60 minutes at 500°C. under 200 $cm^3$/min dry helium purge. Then the 2-mole % n-butane in helium at a flow rate of 50 $cm^3$/min was passed over the sample for 40 minutes with product stream analysis being carried out at 10 minute intervals. The pseudo-first-order rate constant ($k_A$) was then calculated to determine the catalytic activity of the FeSO-38. The $k_A$ values obtained ranged from 2.7 to 11.9.

Although it has not been clearly established, it is believed that FeSO-38 is structurally related to the mineral zeolite mordenite even though it differs substantially in chemical composition by virtue of the presence of tetrahedral $FeO_2^-$ structural units. The composition is found to have a hydrophilic adsorptive nature and to exhibit a substantial acidity of the type useful in the catalytic conversion of hydrocarbons. Accordingly, it is useful both as an adsorbent and a catalyst or catalyst base in the same applications heretofore utilizing zeolites generally and mordenite specifically.

**Claims**

1. Microporous crystalline ferrosilicate composition having a chemical composition in the anhydrous state expressed in terms of molar oxide ratios of:

$$a\ M_{2/n}O:[Al_xFe_{(1-x)}]_2O_3:b\ SiO_2$$

wherein "M" is at least one cation having the valence "n", "a" has a value of from zero to 3.5, "b" has a value of from 3 to 100, "x" has a value of from zero to 0.98, and having a characteristic X-ray diffraction pattern containing at least the following d-spacings:

| 2θ | d(A) | Relative intensity |
|---|---|---|
| 6.4—6.65 | 13.8—13.3 | M—VS |
| 9.7—9.85 | 9.12—8.98 | S—VS |
| 13.4—13.6 | 6.61—6.51 | M—S |
| 22.2—22.45 | 4.00—3.98 | M—S |
| 25.55—25.8 | 3.486—3.453 | S—VS |
| 27.65—27.85 | 3.226—3.203 | M—S |

2. Composition according to claim 1 wherein the value of "a" is from zero to 2.5, the value of "b" is from 5 to 50, and the value of "x" is from zero to 0.5.

3. Composition according to claim 2 wherein the value of "b" is from 8 to 30 and "x" is zero.

4. Microporous crystalline ferrosilicate prepared by calcining the composition of claim 1 or claim 2 or claim 3 at a temperature in the range of from 350°C. up to the crystal destruction temperature of the ferrosilicate.

5. Process for preparing a ferrosilicate of claim 1 which comprises preparing a reaction mixture having a composition in terms of molar oxide ratios of:

$$0\text{—}10\ R_2O:1\text{—}50\ M_{2/n}O:[Al_xFe_{(1-x)}]_2O_3:10\text{—}100\ SiO_2:200\text{—}2000\ H_2O$$

wherein M is an alkali metal or alkaline earth metal cation having the valence "n", and R is a tetraethylammonium templating agent, and "x" has a value of from zero to 0.99, and maintaining said mixture at a temperature of from 100°C. to 250°C. under autogenous pressure until crystals of the ferrosilicate are formed.

6. Process according to claim 5 wherein "M" represents one or a mixture of sodium, and potassium, and the molar oxide ratios are:

$$1\text{—}6\ R_2O:10\text{—}30\ M_2O:[Al_xFe_{(1-x)}]_2O_3:15\text{—}80\ SiO_2:200\text{—}1200\ H_2O$$

wherein "x" has a value of from zero to 0.5.

7. Process according to claim 6 wherein the value of "x" is zero.

8. Process according to claim 5 wherein the source of $Fe_2O_3$ is iron nitrate.

9. Process according to claim 5 or claim 6 or claim 7 or claim 8 wherein seed crystals having the mordenite-type crystal structure are added to the reaction mixture in an amount of at least 0.001% up to about 10% based on the weight of the solids content thereof.

10. Process for the catalytic conversion of a hydrocarbon feedstock which comprises contacting said feedstock under hydrocarbon conversion conditions with a catalyst comprising the ferrosilicate composition of claim 1.

**Revendications**

1. Composition cristalline microporeuse du type ferrosilicate, qui présente à l'état anhydre, exprimée en rapports molaires des oxydes, la composition chimique suivante:

$$a\ M_{2/n}O:[Al_xFe_{(1-x)}]_2O_3:b\ SiO_2$$

dans laquelle "M" représente au moins un cation de valence "n", "a" a une valeur de zéro à 3,5, "b" a une valeur de 3 à 100, "x" a une valeur de zéro à 0,98, et présentant un diagramme caractéristique de diffraction des rayons X qui contient au moins les distances *d* suivantes:

| 2θ | d(A) | Intensité relative |
|---|---|---|
| 6,4—6,65 | 13,8—13,3 | M—VS |
| 9,7—9,85 | 9,12—8,98 | S—VS |
| 13,4—13,6 | 6,61—6,51 | M—S |
| 22,2—22,45 | 4,00—3,98 | M—S |
| 25,55—25,8 | 3,486—3,453 | S—VS |
| 27,65—27,85 | 3,226—3,203 | M—S |

2. Composition suivant la revendication 1, dans laquelle la valeur de "a" va de zéro à 2,5, la valeur de "b" va de 5 à 50, et la valeur de "x" va de zéro à 0,5.

3. Composition suivant la revendication 2, dans laquelle la valeur de "b" va de 8 à 30 et "x" est égal à zéro.

4. Ferrosilicate cristallin microporeux préparé par calcination de la composition suivant la revendication 1 ou la revendication 2 ou la revendication 3 à une température comprise dans l'intervalle allant de 350°C à la température de destruction des cristaux du ferrosilicate.

5. Procédé de préparation d'un ferrosilicate suivant la revendication 1, qui consiste à préparer un mélange réactionnel dont la composition, exprimée d'après les rapports molaires des oxydes, est la suivante:

$$0\text{—}10\ R_2O{:}1\text{—}50\ M_{2/n}O{:}[Al_xFe_{(1-x)}]_2O_3{:}10\text{—}100\ SiO_2{:}200\text{—}2000\ H_2O$$

où M est un cation de métal alcalin ou de métal alcalinoterreux de valence "n" et R est un agent formant un modèle du type tétra-éthylammonium, et "x" a une valeur de zéro à 0,99, et à maintenir ledit mélange à une température de 100 à 250°C sous pression autogène jusqu'à ce que des cristaux du ferrosilicate soient formés.

6. Procédé suivant la revendication 5, dans lequel "M" représente individuellement ou en mélange le sodium et le potassium et les rapports molaires des oxydes correspondent à la formule:

$$1\text{—}6\ R_2O{:}10\text{—}30\ M_2O{:}[Al_xFe_{(1-x)}]_2O_3{:}15\text{—}80\ SiO_2{:}200\text{—}1200\ H_2O$$

dans laquelle "x" a une valeur de zéro à 0,5.

7. Procédé suivant la revendication 6, dans lequel la valeur de "x" est zéro.

8. Procédé suivant la revendication 5, dans lequel la source de $Fe_2O_3$ est le nitrate de fer.

9. Procédé suivant la revendication 5 ou la revendication 6 ou la revendication 7 ou la revendication 8, dans lequel des germes cristallins ayant une structure cristalline du type mordénite sont ajoutés au mélange réactionnel en une quantité d'au moins 0,001% à environ 10% sur la base du poids de sa teneur en matières solides.

10. Procédé de transformation catalytique d'une charge hydrocarbonée, qui consiste à faire entrer ladite charge dans des conditions de transformation d'hydrocarbures en contact avec un catalyseur comprenant la composition de ferrosilicate suivant la revendication 1.

**Patentansprüche**

1. Mikroporöse kristalline Ferrosilikat-Zusammensetzung mit einer chemischen Zusammensetzung im wasserfreien Zustand, ausgedrückt als molare Verhältnisse der Oxide,

$$a\ M_{2/n}O{:}[Al_xFe_{(1-x)}]_2O_3{:}b\ SiO_2$$

wobei "M" mindestens ein Kation der Wertigkeit "n" ist, "a" einen Wert zwischen 0 und 3,5, "b" einen Wert zwischen 3 und 100 und "x" einen Wert zwischen 0 und 0,98 besitzen, und mit einem charakteristischen Röntgendiffraktogramm, das mindestens die folgenden d-Abstände enthält:

| 2θ | d(A) | Relative intensität |
|---|---|---|
| 6.4—6.65 | 13.8—13.3 | M—VS |
| 9.7—9.85 | 9.12—8.98 | S—VS |
| 13.4—13.6 | 6.61—6.51 | M—S |
| 22.2—22.45 | 4.00—3.98 | M—S |
| 25.55—25.8 | 3.486—3.453 | S—VS |
| 27.65—27.85 | 3.226—3.203 | M—S |

2. Zusammensetzung nach Anspruch 1, in der der Wert von "a" zwischen 0 und 2,5, von "b" zwischen 5 und 50, und von "x" zwischen 0 und 0,5 liegt.

3. Zusammensetzung nach Anspruch 2, in der der Wert von "b" zwischen 8 und 30 liegt und "x" 0 ist.

4. Mikroporöses kristallines Ferrosilikat, hergestellt durch Calcinierung der Zusammensetzung nach einem der Ansprüche 1 bis 3 bei einer Temperatur im Bereich von 350°C bis zu der Kristallzerstörungstemperatur des Ferrosilikats.

5. Verfahren zur Herstellung eines Ferrosilikats nach Anspruch 1, das die Herstellung eines Reaktionsgemischs mit einer Zusammensetzung umfasst, ausgedrückt als molare Verhältnisse der Oxide, von

$$0—10\ R_2O:1—50\ M_{2/n}O:[Al_xFe_{(1-x)}]_2O_3:10—100\ SiO_2:200—2000\ H_2O$$

in der M ein Alkali- oder Erdalkalimetallkation mit der Wertigkeit "n" ist, R ein Tetraethylammonium-Templat ist, und "x" einen Wert von 0 bis 0,99 besitzt, und das Halten der genannten Mischung bei einer Temperatur zwischen 100°C und 250°C unter autogenem Druck, bis Kristalle des Ferrosilikats gebildet werden.

6. Verfahren nach Anspruch 5, wobei "M" eines oder ein Gemisch der Metalle Natrium und Kalium bedeutet und die molaren Verhältnisse der Oxide sind:

$$1—6\ R_2O:10—30\ M_2O:[Al_xFe_{(1-x)}]_2O_3:15—80\ SiO_2:200—1200\ H_2O$$

wobei "x" einen Wert von 0 bis 0,5 besitzt.

7. Verfahren nach Anspruch 6, wobei der Wert von "x" 0 ist.

8. Verfahren nach Anspruch 5, wobei die $Fe_2O_3$-Quelle Eisennitrat ist.

9. Verfahren nach einem der Ansprüche 5 bis 8, bei dem Saatkristalle mit der Kristallstruktur des Mordenit-Typs zu der Reaktionsmischung zugegeben werden in einer Menge von mindestens 0,001 bis etwa 10 Gew.% ihres Feststoffgehalts.

10. Verfahren zur katalytischen Umwandlung eines Kohlenwasserstoff-Einsatzmaterials, das das In-Kontakt-Bringen des Einsatzmaterials unter Bedingungen zur Umwandlung von Kohlenwasserstoffen mit einem Katalysator umfasst, der die Ferrosilikat-Zusammensetzung nach Anspruch 1 enthält.